# DEMANDE DE BREVET EUROPEEN

(11) **EP 0 711 591 A1**
(43) Date de publication de la demande: **15.05.1996**
(21) Numéro de dépôt: 95402438.6
(22) Date de dépôt: 02.11.1995
(51) Int. Cl.: B01D 53/86, B01J 23/38, B01J 23/42

(54) **Filtre anti-poison pour les détecteurs de gaz à principe catalytique**

(30) Priorité: 09.11.1994 FR 9413451
(71) Demandeur: INSTITUT NATIONAL DE L'ENVIRONNEMENT INDUSTRIEL ET DES RISQUES, F-60550 Verneuil en Halatte (FR)
(72) Inventeur: Jamois, Didier, F-75010 Paris (FR); Colin, Lionel, F-54300 Luneville (FR); Wattier, Andrée, F-60410 Roberval (FR)
(74) Mandataire: Santarelli, Marc

(57) **Abrégé**

Filtre antipoison pour détecteur de gaz à principe catalytique constitué d'une matière poreuse supportant au moins de l'ordre de 0.5% en masse d'au moins un élément choisi parmi les éléments suivants : nickel, ruthénium, rhodium, palladium, argent, osmium, iridium, platine, or.

## Description

Les capteurs de gaz de type catalytique sont les détecteurs les plus répandus actuellement en raison de leur facilité d'utilisation et de leur coût. Il existe essentiellement deux types de détecteurs catalytiques sur le marché actuellement :
- les perles catalytiques (filament de platine enrobé d'un matériau réfractaire supportant un catalyseur),
- les filaments de platine (filament de platine bobiné sans enrobage).

Ces détecteurs catalytiques sont cependant très sensibles, à des degrés divers, à la présence dans l'atmosphère de substances telles que les gaz et vapeurs de produits siliconés, chlorés ou soufrés. Ces molécules constituent de véritables poisons de l'activité catalytique de ces capteurs. Le problème majeur de l'empoisonnement est qu'il provoque une variation du signal réel qui ne va pas dans le sens de la sécurité : un détecteur explosimétrique peut alors indiquer une teneur en gaz explosif non dangereuse alors qu'en réalité la limite inférieure d'explosivité (LIE) de ce gaz est franchie.

Une solution consiste donc à protéger l'élément détecteur par un filtre qui retient ces composés désactivants. Jusqu'à présent le matériau le plus utilisé et le plus performant vis-à-vis de la plupart des poisons cités demeure le charbon actif. Il présente cependant trois défauts majeurs :
- son efficacité dépend des conditions ambiantes, en particulier de l'humidité et de la température,
- l'adsorption des molécules sur le charbon actif est réversible et donc temporaire ce qui, en pratique, signifie qu'un poison n'est jamais définitivement neutralisé par ce type de filtre,
- et surtout le charbon actif adsorbe des quantités non négligeables d'autres gaz pouvant être inflammables, par exemple le butane, ce qui entraîne des temps de réponse très longs pour ces gaz.

Les filtres utilisés jusqu'à présent ne suffisent donc pas à protéger efficacement ces éléments détecteurs tout en assurant les temps de réponse spécifiés par les normes sur les détecteurs explosimétriques, c'est-à-dire : 30 secondes pour atteindre 90 % du signal (NF-EN 50054, NF-EN 50057, NF-EN 50058).

Pour plus de renseignements on peut se référer aux documents suivants :
- The use of charcoal and carbon cloth for the poisonprotection of catalytic gas sensors - S.J. Gentry and S.R. Howarth - In Sensors and Actuators, 5 (1984) 265-273.
- Silicone vapor poisoning of catalytic methane sensors - J.E. Chilton, J.N. Baran, W.E. Thomas, L.J.E. Hofer, J.L. Snyder - communication à la 4ème conférence "Coal Mine Electrotechnol." (1978).
- The theory of poisoning of catalytic flamable gas-sensing elements - S.J. Gentry and P.T. Walsh - In "Solid State Gas Sensors" edited by P. Moseley anb B.C. Tofield - Adam Hilger (1987).
- The role of catalysis in solid state gas sensors - S.J. Gentry and T.A. Jones - In Sensors and Actuators, 10 (1986) 141-163.

L'invention a pour objet un filtre antipoison indépendant du capteur à protéger (d'où une absence de modification de ce capteur quel qu'il soit et une possibilité de remplacement aisée) et ayant une bonne résistance à l'héxaméthyldisiloxane (HMDS) avantageusement combiné à un temps de réponse satisfaisant au butane.

En effet, parmi les poisons reconnus des détecteurs catalytiques, les composés siliconés volatils sont de loin les plus virulents. Le composé le plus volatil de cette famille est l'HMDS. Une perle catalytique classique ou un filament catalytique sans protection particulière se désensibilise en quelques secondes en présence de moins de 1 ppm de HMDS dans l'air.

Le principe général de l'invention repose sur la mise en évidence de la réaction dissociative de HMDS à la surface du platine et à température ambiante. En conséquence, un filtre ayant comme constituant une poudre de platine peut arrêter de façon définitive, dans les conditions d'utilisation, la diffusion du HMDS vers le capteur bénéficiant de cette protection. Le charbon actif utilisé seul, par comparaison, ne bloque pas les molécules adsorbées à sa surface.

L'invention propose ainsi un filtre anti-poison pour détecteur catalytique de gaz combustible comportant au moins de l'ordre de 0.5% en masse de particules dispersées d'au moins un élément choisi parmi les éléments suivants : nickel, ruthénium, rhodium, palladium, argent, osmium, iridium, platine, or.

Un tel filtre permet de protéger les détecteurs de gaz à principe catalytique contre les substances de l'atmosphère susceptibles de les rendre inaptes à la détection des gaz, à savoir : les silicones volatils, les composés organaniques volatils du plomb, les composés sulfurés et halogénés volatils.

L'élément est avantageusement du platine.

De manière préférée, pour notamment des raisons de coût, la teneur en masse de l'élément précité est inférieure à 20%.

L'invention propose également que, de façon particulièrement avantageuse, les propriétés réactives du platine (ou d'un élément équivalent) soient combinées avec les propriétés de rétention du charbon actif.

En effet, la combinaison du platine et du charbon actif permet de considérablement améliorer l'efficacité du platine de sorte que la résistance à l'HMDS d'un tel filtre est largement conforme aux prescriptions des normes européennes relatives aux appareils détecteurs de gaz explosifs pour la mine (appareil du groupe I : NF-EN 50055, NF-EN 50056). Selon ces normes, les détecteurs ne doivent pas perdre plus de 10% de leur sensibilité suite à une exposition de 40 minutes à 10 ppm d'HMDS.

La quantité de charbon actif maximum à incorporer dans le filtre à été déterminée expérimentalement pour que la mesure du temps de réponse au butane soit également conforme aux normes européennes (30 secondes à 90 % du signal). Cette quantité est avantageusement comprise entre 2 et 10% en masse.

De manière préférée l'élément réactif et le charbon actif sont supportés par une matière poreuse, organique ou inorganique. Ainsi le filtre peut être constitué d'une feuille supportant les composées précités d'épaisseur avantageusement comprise entre 0.5 et 3 mm, par exemple à base de cellulose. Le platine (ou un élément équivalent) a alors une teneur surfacique comprise entre 0.05 et 3.00 mg/cm et le charbon actif, une teneur surfacique comprise entre 0.15 et 1.5 mg/cm.

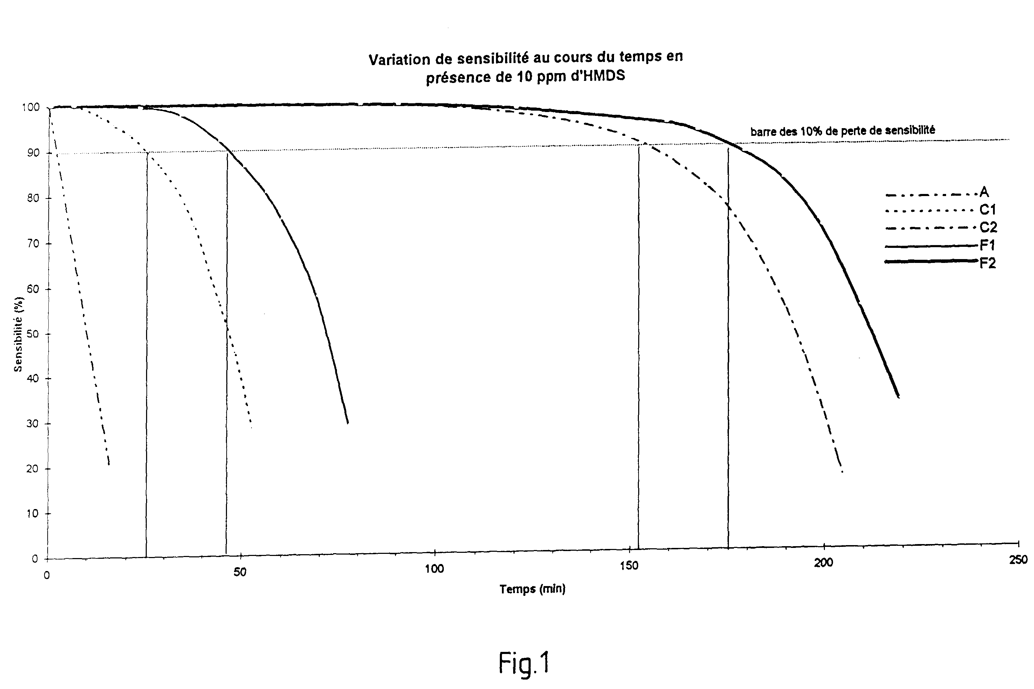

Des exemples de réalisation sont indiqués ci-dessous en regard de la figure 1 qui représente l'évolution au cours du temps de la sensibilité au méthane de divers capteurs en présence d'HMDS.

Des poudres commerciales ont permis la réalisation de filtres constitués d'une feuille poreuse de cellulose d'épaisseur sensiblement égale à 1 mm et contenant :
- 0.5 mg de charbon actif par cm, ce qui correspond à une teneur massique de 3%,
- entre 0.10 et 0.33 mg de platine par cm, ce qui correspond à une teneur massique de 0.8% à 2%.

Tous les filtres ainsi réalisés induisent des temps de réponse au butane de l'ordre de 30 secondes. La meilleure résistance au HMDS (200 minutes pour perdre 10% de sensibilité au méthane en présence de 10 ppm d'HMDS) a été obtenue pour la quantité la plus importante de platine dans le filtre, c'est-à-dire 0.33 mg/cm.

Un test de résistance à l'HMDS a été effectué sur différents détecteurs et pour différentes protections vis-à-vis des poisons. Leurs caractéristiques sont rassemblées dans le tableau ci-dessous où :
- Tb 90% représente le temps de réponse du capteur au butane à 90% du signal final.
- N° représente la référence du ou de la gamme d'échantillon(s) testé(s) à savoir :

∗ A qui désigne un détecteur quelconque sans protection particulière,
∗ C1 et C2 qui désignent un détecteur (perle catalytique classique ou filament) protégé par un filtre en charbon actif (C1 est pourvu d'un filtre chargé avec environ 5% massique de charbon actif, C2 est pourvu d'un filtre chargé avec une quantité de charbon actif double de celle de C1),
∗ F1 et F2 désignent deux filaments catalytiques protégés par deux fabrications différentes de filtres antipoison, l'un (F1) contenant 0.1 mg/cm de platine et 0.5 mg/cm de charbon actif sur une feuille poreuse de cellulose de 1 mm d'épaisseur, l'autre (F2) contenant 0.33 mg/cm de platine et 0.5 mg/cm de charbon actif sur une feuille poreuse de cellulose de 1 mm d'épaisseur.

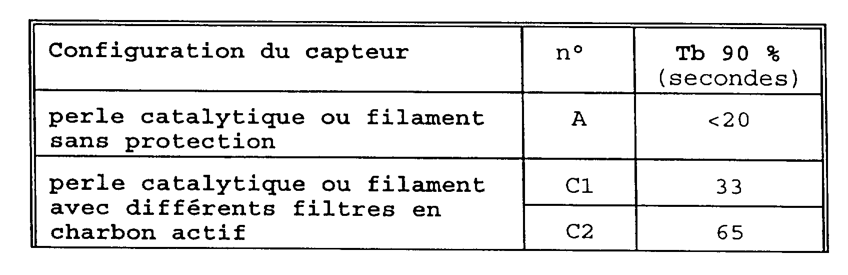

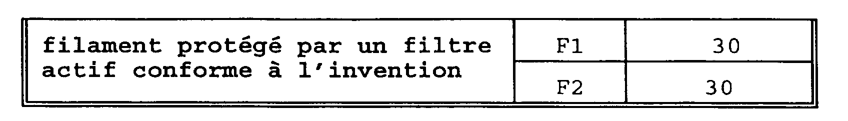

Les résultats comparatifs de ces détecteurs vis-à-vis de la résistance au HMDS sont présentés figure 1.

En ordonné est représentée l'échelle de sensibilité relative des capteurs testés au méthane, en abscisse est représenté le temps. Les courbes obtenues montrent l'évolution de la sensibilité au méthane des capteurs testés en fonction du temps en présence de 10 ppm d'HMDS dans l'atmosphère.

Ces résultats font ressortir que l'invention permet, par rapport à une protection à l'aide d'un filtre classique contenant du charbon actif, soit un meilleur temps de réponse au butane pour une résistance à l'HMDS sensiblement identique (F2 par rapport à C2), soit une meilleure résistance à l'empoisonnement pour un temps de réponse au butane équivalent (F2 et F1 par rapport à C1).

On peut faire les remarques suivantes :
- le support des poudres citées en exemple est constitué de cellulose, mais d'autres types de support peuvent être utilisés : mousses polymères, téflon imprégné. De même, la technique d'incorporation des éléments réactifs et du charbon actif sur ce support peut être, de façon non-exaustive, l'une des méthodes suivantes : mélange des constituants dans l'eau ou l'alcool ou dans un autre solvant, filtration sur un filtre éventuellement préformé (pour une mise en forme différente), évaporation et dépôt sous vide...
- la résistance à l'empoisonnement par les silicones est actuellement caractérisée par le test de résistance au HMDS. C'est le test de référence pour évaluer l'efficacité d'une protection contre l'empoisonnement. D'autres poisons peuvent être arrêtés par ce filtre actif, par exemple : les composés du plomb (principalement le plomb tetraéthyle), les composés du phosphore (principalement les trialkylphosphates), les composés du soufre (H₂S, SO₂, ...) et les composés halogénés (organohalogénés, HCl,...).
- le filtre actif a été testé sur les filaments catalytiques mais il permet de protéger également n'importe quelle perle catalytique ou autre type de capteur de gaz utilisant des catalyseurs.

## Revendications

1. Filtre antipoison pour détecteur de gaz à principe catalytique constitué d'une matière poreuse supportant au moins de l'ordre de 0.5% en masse d'au moins un élément choisi parmi les éléments suivants : nickel, ruthénium, rhodium, palladium, argent, osmium, iridium, platine, or.

2. Filtre antipoison selon la revendication 1, caractérisé en ce que ledit élément est du platine.

3. Filtre antipoison selon la revendication 1, ou la revendication 2, caractérisé en ce que la teneur en masse dudit élément est inférieure à 20%.

4. Filtre antipoison selon l'une quelconque des revendications 1 à 3, caractérisé en ce que ce filtre comporte également au moins de l'ordre de 2% en masse de charbon actif.

5. Filtre antipoison selon l'une quelconque des revendications 1 à 4, caractérisé en ce que ce la teneur en masse du charbon actif est inférieure à 10%.

6. Filtre antipoison selon l'une quelconque des revendications 1 à 5, caractérisé en ce que ledit élément et le charbon actif sont supportés par une matière poreuse organique.

7. Filtre antipoison selon l'une quelconque des revendications 1 à 5, caractérisé en ce que ledit élément et le charbon actif sont supporté par une matière poreuse inorganique.

8. Filtre antipoison selon la revendication 6, caractérisé en ce que ladite matière poreuse organique à la forme d'une feuille d'épaisseur comprise entre 0.5 et 3 mm supportant ledit élément à une teneur surfacique comprise entre 0.05 et 3 mg/cm et le charbon actif à une teneur surfacique comprise entre 0.15 et 1.5 mg/cm.

9. Filtre antipoison selon la revendication 8, caractérisé en ce que ce support organique est en cellulose.
